# EUROPÄISCHE PATENTSCHRIFT

(11) **EP 1 270 891 B1**
(45) Veröffentlichungstag und Bekanntmachung des Hinweises auf die Patenterteilung: **29.07.2009**
(21) Anmeldenummer: 02010789.2
(22) Anmeldetag: 15.05.2002
(51) Int. Cl.: F02B 37/00, F01D 25/28, B60K 13/04, F01N 7/18, F01N 7/10, F02B 67/10, F16L 41/08, F16L 41/12, F16L 23/028

(54) **Vorrichtung zur Befestigung eines Abgasturboladers an einem Abgaskrümmer einer Brennkraftmaschine**
Device for fixing a turbocharger to an exhaust manifold of an internal combustion engine
Appareil pour la fixation d'un turbocompresseur à un collecteur d'échappement d'un moteur à combustion interne

(30) Priorität: 21.06.2001 DE 10129916
(43) Veröffentlichungstag der Anmeldung: 02.01.2003
(73) Patentinhaber: Dr. Ing. h.c. F. Porsche Aktiengesellschaft, 70435 Stuttgart (DE); Friedrich Boysen GmbH & Co. KG, 72213 Altensteig (DE)
(72) Erfinder: Pleuss, Christoph, 71287 Weissach (DE); Kühnel, Michael, 72224 Rotfelden-Ebhausen (DE); Engl, Werner, 75365 Calw (DE)

(56) Entgegenhaltungen:
- EP-A- 0 918 144
- DE-A- 19 645 384
- DE-A- 19 819 946
- DE-A- 19 920 822
- US-A- 4 918 917

## Beschreibung

Die Erfindung geht aus von einer Vorrichtung zur Befestigung eines Abgasturboladers an einem Abgaskrümmer einer Brennkraftmaschine nach den Merkmalen des Oberbegriffs des Anspruchs 1.

Aus der DE-AS 1 909 424 oder der US-PS 4,318,273 sind Brennkraftmaschinen bekannt, bei der am Abgaskrümmer ein Abgasturbolader angeflanscht ist, der auf bekannte Art und Weise die Energie des Abgases dazu verwendet, die Frischgase in die Zylinder zu fördern. Zur abgasseitigen Anbindung und Befestigung des Abgasturboladers am Abgaskrümmer sind beide Bauteile mit einem Flansch versehen, die beide durch eine Mutter - Schraubenverbindung verbunden sind. Alternativ dazu können in einem der beiden Flansche auch Gewindeöffnungen eingebracht sein, in denen Befestigungsschrauben Aufnahme finden.

Problematisch bei einer derartigen Flanschbefestigung kann jedoch die Zugänglichkeit zu den Befestigungsschrauben bzw. Befestigungsmuttern sein, da die Freiräume auf beiden Flanschseiten für die Werkzeuge, wie z. B. Schrauben- oder Nussschlüssel oft nicht ausreichend sind. Weiter offenbart DE 198 19 946 A ein Abgaskrümmer, in dem Öffnungen für die Aufnahme von Befestigungsbolzen vorgesehen sind.

Aufgabe der Erfindung ist es daher, für die Befestigung des Abgasturboladers am Abgaskrümmer der Brennkraftmaschine eine Vorrichtung zu entwickeln, bei der eine einfache und leicht zugängliche Montage bzw. Demontage des Abgasturboladers möglich ist.

Die Lösung der Aufgabe erfolgt durch die im Anspruch 1 angegebenen Merkmale.

Durch am Flansch des Abgaskrümmers angeordnete Hülsen wird die Montageebene für die Befestigungsschrauben auf die andere Seite des Abgaskrümmers verlagert, auf der ein ausreichender Montagefreigang gewährleistet ist. Damit kann der Abgasturbolader schnell und einfach montiert werden und der Einsatz von automatisierten Schraubwerkzeugen ist möglich. Ferner durchgreifen die Hülsen das Abgaskrümmerrohr.

In den abhängigen Ansprüchen sind weitere vorteilhafte Ausgestaltungen und Verbesserungen der erfindungsgemäßen Vorrichtung enthalten.

Die Hülsen sind auf einer Oberseite vorzugsweise durch Schweißen mit dem Abgaskrümmerrohr verbunden.

Zur Anbindung der Hülsen am Flansch des Abgaskrümmers ist der Flansch mit Befestigungsöffnungen versehen, in die ein Befestigungsstutzen der Hülsen eingreift, wobei die Hülsen mit dem Abgaskrümmerflansch stoffschlüssig verbunden sind.

Der Abgaskrümmer ist in vorteilhafter Weise als Doppelrohr ausgebildet, wobei die Hülsen das Außenrohr des Abgaskrümmers durchgreifen. Durch die Verlagerung der Montageebene über den Rohrverlauf der gasführenden Innenrohre können die notwendigen Querschnitte der Innenrohre bei minimiertem Bauraumbedarf für die Außengeometrie des Abgaskrümmers realisiert werden. Dadurch, dass die Hülsen in dem durch das Doppelrohr ausgebildeten Luftspalt des Abgaskrümmers angeordnet sind, findet eine thermische Entkoppelung der Hülsen von den heissen Abgasen statt, so dass die Schweißnahtstellen im Bereich der Hülsen und die Schraubverbindung geringer temperaturbelastet sind.

Die für die Befestigungsschrauben und die Hülsen verwendeten Werkstoffe sind hinsichtlich ihres Wärmeausdehnungskoeffizienten so abgestimmt, dass eine dauerfeste Schraubenverbindung ohne zusätzliche Schraubensicherung erreichbar ist. Als Schraubenwerkstoff kann beispielsweise ein Vergütungsstahl verwendet werden, während für den Hülsenwerkstoff Edelstahl in Frage kommt. Durch die Wahl eines derartigen Hülsenwerkstoffes ist gleichzeitig die Schweißbarkeit mit der Außenschale des Abgaskrümmers gewährleistet.

Die im Befestigungsflansch des Abgasturboladers vorgesehenen Öffnungen sind mit einem Innengewinde versehen, in die das Außengewinde der Befestigungsschrauben Aufnahme findet.

Eine Ausführungsbeispiel der Erfindung ist in der nachfolgenden Beschreibung und Zeichnung näher erläutert.

### Es zeigen:

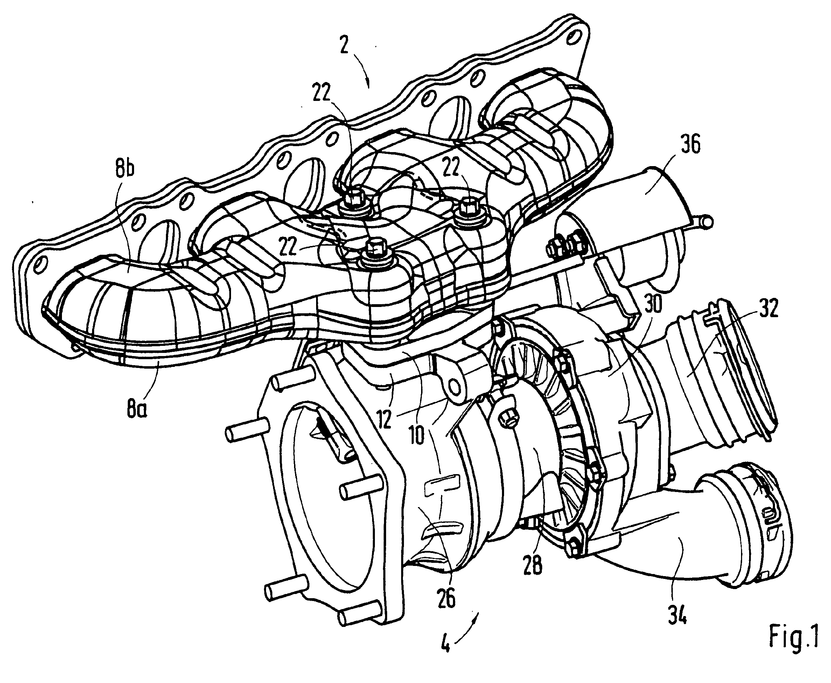

- Fig. 1: eine Befestigungsvorrichtung für einen Abgasturbolader am Abgaskrümmer einer Brennkraftmaschine und

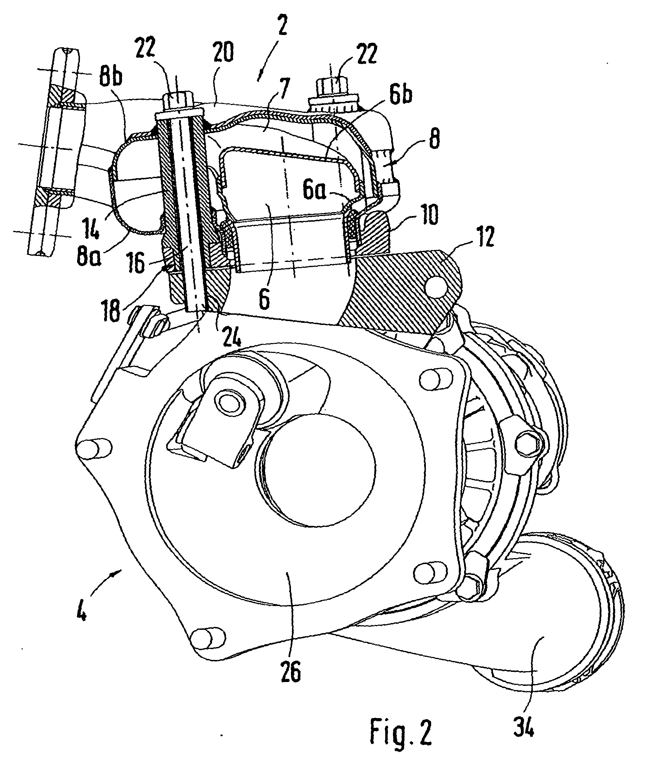

- Fig. 2: einen Schnitt durch die Befestigungsvorrichtung.

### Beschreibung des Ausführungsbeispieles

An einem Abgaskrümmer 2 für eine mehrzylindrige Brennkraftmaschine ist ein Abgasturbolader 4 befestigt. Der Abgaskrümmer 2 weist ein gasführendes Innenrohr 6 auf, das unter Einhaltung eines Zwischenraumes 7 bzw. Luftspaltes von einem Außenrohr 8 umschlossen ist. Sowohl das gasführende Innenrohr 6 als auch das Außenrohr 8 des Abgaskrümmers 2 bestehen aus einer Unterschale 6a bzw. 8a und einer Oberschale 6b bzw. 8b. Beide Unterschalen 6a, 8a sind mit den Oberschalen 6b, 8b verschweißt.

Die Unterseite des Abgaskrümmers 2 ist mit einem Flansch 10 versehen, an dem der ebenfalls mit einem Flansch 12 versehene Abgasturbolader 4 befestigt ist. Dazu sind im vorliegenden Ausführungsbeispiel drei das Außenrohr 8 durchgreifende Hülsen 14 vorgesehen, in denen Befestigungsschrauben 16 für den Abgasturbolader 4 geführt bzw. aufgenommen sind. Die drei gleichartig ausgebildeten Hülsen 14 (nur eine im Schnitt dargestellt) weisen an ihrem unteren Ende einen Befestigungsstutzen 18 auf, der in im Abgaskrümmerflansch 10 vorgesehene Durchgangsöffnungen Aufnahme findet, wobei die Hülsen 14 zusätzlich mit dem Flansch verschweißt sind. Die Hülsen 14 sind durch die Unter- und Oberschale 8a, 8b des Außenrohres 8 hindurchgeführt und mit einem auf der Oberschale 8b aufliegenden Verstärkungsblech 20 sowohl mit diesem, als auch mit der Oberschale 8b verschweißt. Die mit einem Schraubenkopf 22 versehenen Befestigungsschrauben 16 werden von der für die Montage frei zugänglichen Oberseite des Abgaskrümmers 2 in die Hülsen 14 eingesteckt und im Befestigungsflansch 12 des Abgasturboladers 4 verschraubt. Dazu sind im Flansch 12 mit einem Gewinde versehene Öffnungen 24 vorgesehen, in die die Befestigungsschrauben 16 eingeschraubt sind.

Der Werkstoff für die Befestigungsschrauben 16 besteht aus einem Vergütungsstahl, z. B. 40CrMoV47V, während der Hülsenwerkstoff aus Edelstahl, z. B. X12Cr13, besteht.

Der Abgasturbolader 4 besteht im wesentlichen aus einem Turbinengehäuse 26, einem Lagergehäuse 28 für das Laufzeug, einem das Verdichterrad aufnehmenden Verdichtergehäuse 30, einem Lufteintrittsstutzen 32 und einem Luftaustrittsstutzen 34. Weiterhin ist noch eine sog. Waste - Gate - Steuerdose 36 erkennbar, mit deren Hilfe der Ladedruck geregelt werden kann.

## Patentansprüche

1. Vorrichtung zur Befestigung eines Abgasturboladers an einem Abgaskrümmer einer Brennkraftmaschine, mit einem am Abgaskrümmer vorgesehenen Krümmerflansch, an dem ein ebenfalls mit einer Flanschfläche versehener Abgasturbolader befestigbar ist, **dadurch gekennzeichnet, dass** der an einer Seite des Abgaskrümmers (2) vorgesehene Krümmerflansch (10) mit zur gegenüberliegenden Seite des Abgaskrümmers (2) führenden Hülsen (14) verbunden ist, in denen Schrauben (16) zur Befestigung des Abgasturboladers (4) geführt sind, und wobei die Hülsen (14) den Abgaskrümmer (2) durchgreifen.

2. Vorrichtung nach Anspruch 1, **dadurch gekennzeichnet, dass** die Hülsen (14) auf einer Oberseite des Abgaskrümmers (2) mit diesem verbunden sind.

3. Vorrichtung nach Anspruch 1 oder 2, **dadurch gekennzeichnet, dass** die Hülsen (14) Befestigungsstutzen (18) aufweisen, die in Befestigungsöffnungen des Krümmerflansches (10) Aufnahme finden, wobei die Hülsen (14) mit dem Krümmerflansch (10) stoffschlüssig verbunden sind.

4. Vorrichtung nach einem der vorhergehenden Ansprüche, **dadurch gekennzeichnet, dass** der Abgaskrümmer (2) als Doppelrohr ausgebildet ist, wobei die Hülsen (14) das Außenrohr (8) des Abgaskrümmers (2) durchgreifen.

5. Vorrichtung nach einem der vorhergehenden Ansprüche, **dadurch gekennzeichnet, dass** die Werkstoffe für die Befestigungsschrauben (16) und für die Hülsen (14) gleiche oder ähnliche Wärmeausdehnungskoeffizienten aufweisen.

6. Vorrichtung nach einem der vorhergehenden Ansprüche, **dadurch gekennzeichnet, dass** die Befestigungsschrauben (16) von der Oberseite des Abgaskrümmers (2) in die Hülsen (14) eingesteckt und im Flansch (12) des Abgasturboladers (4) verschraubt sind.

## Claims

1. Device for fastening an exhaust-gas turbocharger to an exhaust manifold of an internal combustion engine, having a manifold flange which is provided on the exhaust manifold and to which an exhaust-gas turbocharger, which is likewise provided with a flange surface, can be fastened, **characterized in that** the manifold flange (10), which is provided on one side of the exhaust manifold (2), is connected to sleeves (14) which lead to the opposite side of the exhaust manifold (2), in which sleeves (14) are guided screws (16) for fastening the exhaust-gas turbocharger (4), with the sleeves (14) extending through the exhaust manifold (2).

2. Device according to Claim 1, **characterized in that** the sleeves (14) are connected to the exhaust manifold (2) on an upper side of the latter.

3. Device according to Claim 1 or 2, **characterized in that** the sleeves (14) have fastening pipe stubs (18) which are received in fastening openings of the manifold flange (10), with the sleeves (14) being cohesively connected to the manifold flange (10).

4. Device according to one of the preceding claims, **characterized in that** the exhaust manifold (2) is embodied as a double tube, with the sleeves (14) extending through the outer tube (8) of the exhaust manifold (2).

5. Device according to one of the preceding claims, **characterized in that** the materials for the fastening screws (16) and for the sleeves (14) have identical or similar coefficients of thermal expansion.

6. Device according to one of the preceding claims, **characterized in that** the fastening screws (16) are inserted into the sleeves (14), and are screwed in the flange (12) of the exhaust-gas turbocharger (4), from the upper side of the exhaust manifold (2).

## Revendications

1. Appareil pour la fixation d'un turbocompresseur de gaz d'échappement à un collecteur d'échappement de moteur à combustion interne, avec une bride du collecteur prévue au niveau du collecteur d'échappement au niveau de laquelle un turbocompresseur de gaz d'échappement également pourvu d'une surface de bride peut être fixé, **caractérisé en ce que** la bride de collecteur (10) prévue au niveau d'un côté du collecteur d'échappement (2) est reliée aux douilles (14) conduisant au côté opposé du collecteur d'échappement (2), des vis (16) étant introduites dans lesdites douilles pour la fixation du turbocompresseur de gaz d'échappement (4) et les douilles (14) traversant le collecteur d'échappement (2).

2. Appareil selon la revendication 1, **caractérisé en ce que** les douilles (14) sont reliées au collecteur d'échappement (2) sur un côté supérieur de celui-ci.

3. Appareil selon la revendication 1 ou 2,
**caractérisé en ce que** les douilles (14) comportent des raccords de fixation (18) logés dans des ouvertures de fixation de la bride de collecteur (10), les douilles (14) étant reliées par complémentarité de matières à la bride de collecteur (10).

4. Appareil selon l'une quelconque des revendications précédentes, **caractérisé en ce que** le collecteur d'échappement (2) prend la forme d'un double tube, les douilles (14) du tube extérieur (8) traversant le collecteur d'échappement (2).

5. Appareil selon l'une quelconque des revendications précédentes, **caractérisé en ce que** les matières utilisées pour les vis de fixation (16) et pour les douilles (14) présentent des coefficients de dilatation thermique égaux ou similaires.

6. Appareil selon l'une quelconque des revendications précédentes, **caractérisé en ce que** les vis de fixation (16) sont enfichées dans les douilles (14) sur le côté supérieur du collecteur d'échappement (2) et vissées dans la bride (12) du turbocompresseur de gaz d'échappement (4).
